# EUROPÄISCHE PATENTSCHRIFT

(11) **EP 1 479 784 B1**
(45) Veröffentlichungstag und Bekanntmachung des Hinweises auf die Patenterteilung: **31.12.2008**
(21) Anmeldenummer: 04009273.6
(22) Anmeldetag: 20.04.2004
(51) Int. Cl.: C21D 9/00, C21D 1/673, C21D 1/42, B21D 24/00

(54) **Verfahren zum Herstellen von Formbauteilen**
Method for producing a formed component
Procédé de fabrication d'une pièce de forme

(30) Priorität: 21.05.2003 DE 10322928
(43) Veröffentlichungstag der Anmeldung: 24.11.2004
(73) Patentinhaber: ThyssenKrupp Automotive AG, 44793 Bochum (DE)
(72) Erfinder: Steinhöfer, Detleff, Dipl.-Ing., 33758 Schloss Holte-Stukenbrock (DE); Kolleck, Ralf, Dr.-Ing., 76709 Kronau (DE)
(74) Vertreter: Meyer, Hans-Joachim

(56) Entgegenhaltungen:
- EP-A- 0 069 884
- EP-A- 0 310 693
- EP-A- 0 330 693
- EP-A- 0 431 224

## Beschreibung

Die Erfindung betrifft ein Verfahren zum Herstellen von Formbauteilen aus werkzeugvergütbarem Stahlblech, bei dem das Stahlblech auf eine Temperatur oberhalb der Umwandlungstemperatur Ac3 erwärmt, danach umgeformt und anschließend bis unterhalb der Gefügeumwandlungstemperatur geregelt abgekühlt wird.

Für die Herstellung von Formbauteilen aus Stahl, speziell im Automobilbau, werden verstärkt Bleche oder Blechprofile eingesetzt, die im Presshärtverfahren umgeformt und gehärtet werden. Derartige Stähle weisen beispielsweise die nachfolgende Zusammensetzung auf: Kohlenstoff (C) 0,19 bis 0,25, Silizium (Si) 0,15 bis 0,50, Mangan (Mn) 1,10 bis 1,40, Titan (Ti) 0,020 bis 0,050, Bor (B) 0,002 bis 0,005, Aluminium (Al) 0,02 bis 0,06 sowie Phosphat (P) in einem Anteil bis max. 0,025, Schwefel (S) max. 0,015, Chrom (Cr) max. 0,35 und Molybdän (Mo) max. 0,35, wobei der Rest Eisen (Fe) ist einschließlich erschmelzungsbedingter Verunreinigungen.

Nach der EP 1 300 476 A1 ist es bekannt, derartige Formbauteile ausgehend von Platinen oder Blechprofilen herzustellen. Nachteilig dabei ist das Erwärmen derartiger Bleche oder Profile sehr aufwändig, da diese nacheinander in einem Durchlaufofen erwärmt werden müssen. Danach müssen die auf mindestens 750° C erwärmten Platinen gehandhabt und in die Presse eingelegt werden, was aufwändige Handhabungsgeräte erfordert.

Die EP-A-0 069 884 beschreibt eine Einrichtung zur Herstellung von aus Bandmaterial geschnittenen wärmebehandelten Blechteilen, insbesondere Ampullenfeilen. Die Einrichtung umfasst eine Bandabwickel- und Vorschubeinheit, ggf. eine mechanische Verformeinheit, insbesondere eine Verzahn-und/oder Schärfeinheit, eine Erhitz- und Abkühleinheit sowie eine Abläng-bzw. Trennvorrichtung. Um in Massenproduktion formbeständige, deformationsfreie Fertigerzeugnisse herstellen zu können, besitzt die Einrichtung eine quer zur Transportlinie des Bandmaterials alternierend bewegliche, auf einem Querschlitten angeordnete Trenn- und Abkühlvorrichtung, die in zwei aneinander pressbaren, im Wesentlichen parallelen, gekühlten Druckplatten angeordnete Messerpaare enthält. Bei dieser Einrichtung wird das Ablängen bzw. Trennen nach Erhitzung des Bandmaterials in noch warmem Zustand des Werkstoffes vor dem Abkühlen vorgenommen. Das abgelängte Material wird hiernach während des Abkühlens zwischen den Druckplatten eingespannt gehalten, um ein Freiwerden von eventuell vorhandenen inneren Spannungen in Form einer Deformation zu verhindern.

Die EP-A-0 431 224 offenbart ein Verfahren zur Herstellung eines Blattes einer Blattfeder. Das Verfahren umfasst die Schritte: Erwärmen von Ausgangsmaterial einer Blattfeder auf Austenitisierungstemperatur, Walzen des erwärmten Materials in eine gewünschte Form, Bearbeiten des gewalzten Materials, wobei dieses auf eine bestimmte Länge abgelängt und/oder mit einem Bolzenloch und/oder einem Bügelloch versehen wird, Kühlen des bearbeiteten Materials, wobei dem bearbeiteten Material eine Krümmung aufgezwungen wird, so dass das Material in dem gekrümmten Zustand aushärtet. Der Bearbeitungsschritt wird gegebenenfalls in zwei oder drei Stufen mit entsprechenden Zwischenerwärmungen vor dem abschließenden Kühlen ausgeführt.

In der EP-A-0 310 693 ist ein Verfahren zum Herstellen von Wendemessem, insbesondere zur Verwendung in Hobelmaschinen beschrieben, bei dem ein endloser Bandstahl gehärtet und nach dem Härten an mindestens einer seiner Längsseiten angeschliffen wird, um eine Schneidkante herzustellen, bevor die einzelnen Wendemesser abgelängt werden. Um die Abrundungen der Ecken der Wendemesser einfacher herstellen zu können, werden auf der späteren Ablänglinie im Bereich der jeweiligen Schneidkante V-förmige Prägungen mittels eines Press- und/oder Quetschvorganges angebracht. Anschließend erfolgt das Härten des Bandstahles, wobei das Härten gegebenenfalls nur in dem für die späteren Schneidkanten vorgesehenen Randbereich erfolgt. Danach werden die Schneidkanten angeschliffen und die einzelnen Wendemesser schließlich von dem endlosen Bandstahl an den Ablänglinien abgelängt.

Der vorliegenden Erfindung liegt die Aufgabe zugrunde, das aus der EP 1 300 476 A1 bekannte Verfahren zum Herstellen von Formbauteilen aus werkzeugvergütbarem Stahlblech zu vereinfachen und den Investitionsaufwand für die mit dem Prozess in Zusammenhang stehenden Anlagen zu verringern.

Diese Aufgabe wird durch ein Verfahren mit den Merkmalen des Anspruchs 1 gelöst. Vorteilhafte Aus- und Weiterbildungen sind in den Ansprüchen 2 bis 12 beschrieben.

Die mit der Erfindung erzielten Vorteile bestehen insbesondere darin, dass mit geringerem Investitionsaufwand eine schnellere Fertigung erzielt werden kann. Weiterhin vorteilhaft erlaubt das erfindungsgemäße Verfahren ein äußerst flexibles Herstellen unterschiedlicher Teile, da bei der Herstellung direkt vom Coil nicht mehr der gesamte Ofen mit den Transporteinrichtungen umgerüstet werden muss, wie dieses erforderlich wäre, wenn von Platinen ausgegangen wird, die unterschiedliche Formen für unterschiedliche Formbauteile aufweisen.

Weiterhin vorteilhaft kann die Anlage in einfacher Weise auch noch später derartig umgerüstet werden, dass von unbeschichteten Blechen ausgegangen wird, wobei dann die Bleche zumindest bis zur Umformstation in der Presse mit inerter Atmosphäre beaufschlagt werden. Ein weiterer Vorteil ergibt sich bei der Ausbildung, dass die Schneidoperationen am erwärmten Blech durchgeführt werden. Durch diese Maßnahme wird der Verschleiß der Schneidwerkzeuge wesentlich herabgesetzt.

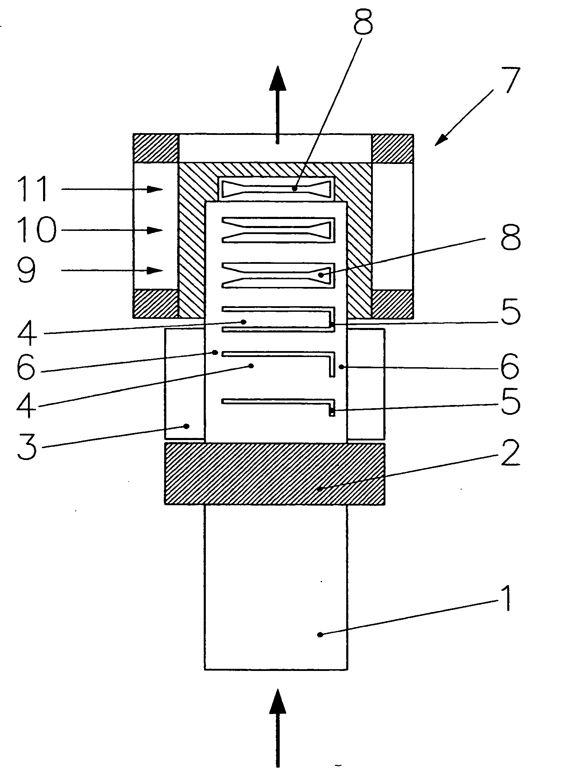

Ein Ausführungsbeispiel der Erfindung ist in der Zeichnung dargestellt und wird im Folgenden näher beschrieben. Die einzige Zeichnung zeigt eine schematische Draufsicht auf eine Anlage zum Herstellen von Formbauteilen aus werkzeugvergütbarem Stahlblech, ausgehend von einem Coil.

Auf einem nicht dargestellten Abwickelhaspel ist das zu einem Coil 1 aufgewickelte Stahlblech gelagert. Es wird von hier abgewickelt und - sofern erforderlich - gerichtet. In einer Erwärmungsanlage 2, die, wie im Ausführungsbeispiel gezeigt, ein Induktionsofen auf der Basis der Querfeldinduktion sein kann, wird das abgewickelte und - sofern erforderlich - gerichtete Blechband auf eine Temperatur oberhalb der Umwandlungstemperatur Ac₃ erwärmt. Als Erwärmungsofen kann selbstverständlich in gleicher Weise anstatt eines Induktionsofens ein konventioneller, mit Gas oder elektrischer Erwärmung betriebener Ofen eingesetzt werden. Der Erwärmungsanlage 2 schließt sich eine Haltezone 3 an. In dieser Haltezone 3 wird das Band auf der für die weitere Bearbeitung gewählten Temperatur, beispielsweise oberhalb 850° C, gehalten.

In der Haltezone 3 der Erwärmungsanlage 2 ist im Ausführungsbeispiel eine nicht näher dargestellte 2D-Laserschneidanlage installiert. Beim Ausführungsbeispiel dient diese dazu, einen die Platine 4 U-förmig umgebenden Schnitt 5 auszuführen. Wie der schematischen Darstellung zu entnehmen ist, erfolgt das Schneiden über mehrere nacheinander angeordnete, parallel arbeitende Laserschneidköpfe. Durch diese Maßnahme wird erreicht, dass die Platine 4 einseitig am Rand 6 fest ist. Damit erübrigt sich eine Handhabungseinrichtung zum Transport in die sich anschließende Mehrstufenpresse 7. Die Anbindung der Platinen 4 an den Rand 6 des Bandes wird je nach den Gegebenheiten nach fachmännischem Ermessen festgelegt.

Anstatt einer Laserschneideinrichtung können auch beliebige andere Schneideinrichtungen vorgesehen werden, wie beispielsweise Sägen oder Stanzschneidwerkzeuge.

Als Formbauteil 8 ist im Ausführungsbeispiel schematisch ein Türverstärkungsprofil dargestellt, das in Seitentüren von Kraftfahrzeugen eingebaut wird, um die Folgen eines Seitencrashs zu mildern.

Die Platine 4 wird in der ersten Bearbeitungsstufe 9 der Mehrstufenpresse auf die Bauteilgeometrie umgeformt und im gekühlten Umformwerkzeug bis unter die Gefügeumwandlungstemperatur abgekühlt, im Ausführungsbeispiel vorzugsweise auf eine Temperatur von 450° C. Das nicht näher dargestellte Umformwerkzeug wird hierzu vorzugsweise mit Wasser als Kühlmedium gekühlt und gibt somit die Kühlung indirekt an das Formbauteil 8 weiter.

Im Ausführungsbeispiel erfolgt in einer zweiten Bearbeitungsstufe 10 innerhalb der Mehrstufenpresse 7 ein Abkühlen des Formbauteiles 8 auf ca. 50° C. Diese zweite Abkühlphase kann geregelt oder ungeregelt erfolgen. Der Vorteil dieser zweistufigen Abkühlung des Formbauteils 8 liegt in der Aufteilung des Gesamtkühlprozesses, wodurch die Zykluszeiten zur Herstellung der Formbauteile 8 nahezu halbiert werden können. Die Abkühlung in der zweiten Bearbeitungsstufe 10 kann ebenfalls über ein gekühltes Werkzeug erfolgen. Es ist jedoch in gleicher Weise möglich, dass die Abkühlung direkt über Luft oder eine Kühlflüssigkeit erfolgt.

In einer dritten Bearbeitungsstufe 11 erfolgt das Abtrennen des Formbauteils 8 vom Rand 6 des Blechbandes. Gleichzeitig oder in einer weiteren Bearbeitungsstufe können Lochungs- oder Schneidarbeitsgänge am Formbauteil 8 durchgeführt werden.

### Bezugszeichenliste

- 1.: Coil
- 2.: Erwärmungsanlage
- 3.: Haltezone
- 4.: Platine
- 5.: Schnitt
- 6.: Rand
- 7.: Mehrstufenpresse
- 8.: Formbauteil
- 9.: erste Bearbeitungsstufe
- 10.: zweite Bearbeitungsstufe
- 11.: dritte Bearbeitungsstufe

## Patentansprüche

1. Verfahren zum Herstellen von Formbauteilen (8) aus werkzeugvergütbarem Stahlblech, bei dem das Stahlblech ausgehend von einem Coil (1) abgewickelt und auf eine Temperatur oberhalb der Umwandlungstemperatur Ac3 erwärmt wird,
aus dem erwärmten Stahlblech Platinen (4) bis auf Coilanbindungen durch teilweises Trennen ausgeschnitten werden,
die jeweilige Platine (4) mittels eines Umformwerkzeuges zu einem Formbauteil (8) umgeformt wird,
das Formbauteil (8) bis unterhalb der Gefügeumwandlungstemperatur geregelt abgekühlt und anschließend vom Coil (1) abgetrennt wird.

2. Verfahren nach Anspruch 1, **dadurch gekennzeichnet, dass** das Erwärmen in einem Durchlaufofen (2) erfolgt.

3. Verfahren nach Anspruch 1 oder 2, **dadurch gekennzeichnet, dass** das Erwärmen induktiv erfolgt.

4. Verfahren nach Anspruch 3, **dadurch gekennzeichnet, dass** das induktive Erwärmen als Querfeldinduktion erfolgt.

5. Verfahren nach Anspruch 1, **dadurch gekennzeichnet, dass** das Erwärmen in zwei Stufen auf eine Vortemperatur induktiv erfolgt und danach in einem Durchlaufofen (2) auf die Endtemperatur erwärmt wird.

6. Verfahren nach einem der Ansprüche 1 bis 5, **dadurch gekennzeichnet, dass** das teilweise Trennen vor dem Erwärmen erfolgt.

7. Verfahren nach einem der Ansprüche 1 bis 6, **dadurch gekennzeichnet, dass** wenigstens ein Trennarbeitsgang mittels Laserschneiden erfolgt.

8. Verfahren nach einem der Ansprüche 1 bis 7, **dadurch gekennzeichnet, dass** das Abkühlen in zwei Stufen erfolgt, wobei die Abkühlung in einer ersten Stufe bis unter die Gefügeumwandlungstemperatur erfolgt und das Werkstück in der zweiten Stufe bis auf eine Temperatur von ca. 50 °C abgekühlt wird.

9. Verfahren nach Anspruch 8, **dadurch gekennzeichnet, dass** die zweite Stufe der Abkühlung geregelt erfolgt.

10. Verfahren nach einem der Ansprüche 1 bis 9, **dadurch gekennzeichnet, dass** von einem beschichteten Stahlblech ausgegangen wird.

11. Verfahren nach einem der Ansprüche 1 bis 9, **dadurch gekennzeichnet, dass** von einem unbeschichteten Stahlblech ausgegangen wird und zumindest bei den Arbeitsgängen, bei denen das stahlblech einer erhöhten Temperatur ausgesetzt ist und die vor dem Umformen liegen, das Stahlblech mit einer inerten Atmosphäre beaufschlagt ist.

12. Verfahren nach einem der Ansprüche 1 bis 9, **dadurch gekennzeichnet, dass** die jeweilige Platine (4) in einer Mehrstufenpresse umgeformt wird.

## Claims

1. A method for fabricating shaped components (8) from predetermined sheet steel that is heat treated while inside a press, in which the sheet steel is unwound from a coil (1) and heated to a temperature above the transformation point Ac3, in which metal blanks (4) are cut from the heated sheet steel by partial separating such that the metal blanks are still connected to the coil,
in which the respective metal blank (4) is formed by means of a metal forming tool into a shaped component (8), and wherein the shaped component (8) is cooled in a controlled manner to a temperature below the crystalline-transformation point and is then separated from the coil (1).

2. A method according to claim 1, **characterized in that** the heating is carried out in a continuous furnace (2).

3. A method according to claim 1 or 2, **characterized in that** the heating is carried out inductively.

4. A method according to claim 3, **characterized in that** the inductive heating is carried out as transverse-field heating.

5. A method according to claim 1, **characterized in that** the heating is carried out inductively in two steps to a preliminary temperature and thereafter in a continuous furnace (2) to a final temperature.

6. A method according to any one of claims 1 to 5, **characterized in that** the partial separating is carried out before said heating.

7. A method according to any one of claims 1 to 6, **characterized in that** at least one separating step is carried out by means of laser cutting.

8. A method according to any one of claims 1 to 7, **characterized in that** the cooling is carried out in two steps, wherein the cooling in a first step is carried out to below the sheet steel's crystalline transformation point, and wherein the work piece being cooled in the second step to a temperature of substantially 50°C.

9. A method according to claim 8, **characterized in that** the second step of the cooling is carried out in a controlled manner.

10. A method according to any one of claims 1 to 9, **characterized in that** the sheet steel is coated steel sheet.

11. A method according to any one of claims 1 to 9, **characterized in that** said sheet steel is uncoated steel sheet, wherein at least in the fabricating processes in which the steel sheet is exposed to an elevated temperature and which are carried out prior to said pressing, the steel sheet is subjected to an inert atmosphere.

12. A method according to any one of claims 1 to 9, **characterized in that** the respective metal blank (4) is formed in a multiple-stage press.

## Revendications

1. Procédé pour la fabrication de pièces façonnées (8) en tôle d'acier, aptes à la trempe dans un outil, dans lequel
la tôle d'acier est déroulée d'une bobine (1) et chauffée à une température supérieure à la température de transformation Ac3,
des flans (4) sont découpés dans la tôle d'acier, tout en restant attachés à la bobine par séparation partielle, chaque flan (4) est transformé en une pièce façonnée (8) au moyen d'un outil de façonnage,
la pièce façonnée (8) est refroidie de manière réglée jusqu'à une température inférieure à la température de modification de la microstructure et séparée ensuite de la bobine (1).

2. Procédé selon la revendication 1, **caractérisé en ce que** le chauffage est effectué dans un four à passage continu (2).

3. Procédé selon revendication 1 ou 2, **caractérisé en ce que** le chauffage est effectué par chauffage inductif.

4. Procédé selon la revendication 3, **caractérisé en ce que** le chauffage est effectué par induction transversale.

5. Procédé selon la revendication 1, **caractérisé en ce que** le chauffage est effectué en deux phases à une température préalable, par chauffage inductif, et ensuite à la température finale dans un four à passage continu (2).

6. Procédé selon l'une des revendications 1 à 5, **caractérisée en ce que** la séparation partielle est effectuée avant le chauffage.

7. Procédé selon l'une des revendications 1 à 6, **caractérisée en ce qu'**au moins une opération de séparation est effectuée au moyen d'une découpeuse au laser.

8. Procédé selon l'une des revendications 1 à 7, **caractérisée en ce que** le refroidissement est effectué en deux étapes, le refroidissement étant effectué, dans une première phase, jusqu'à une température inférieure à la température de modification de la microstructure et la pièce étant refroidie jusqu'à une température d'environ 50° C dans la deuxième phase.

9. Procédé selon la revendication 8, **caractérisé en ce que** la deuxième phase du refroidissement est réglé.

10. Procédé selon l'une des revendications 1 à 9, **caractérisé en ce que** l'on part d'une tôle d'acier revêtue.

11. Procédé selon l'une des revendications 1 à 9, **caractérisé en ce que** l'on part d'une tôle d'acier non revêtue et que, au moins lors des opérations dans lesquelles la tôle d'acier est soumise à une température surélevée et qui précèdent le façonnage, la tôle d'acier est soumise à une atmosphère inerte.

12. Procédé selon l'une des revendications 1 à 9, **caractérisé en ce que** chaque platine (4) est transformée dans une presse multi-étages.
